# EUROPÄISCHE PATENTSCHRIFT

(11) **EP 2 331 352 B1**
(45) Veröffentlichungstag und Bekanntmachung des Hinweises auf die Patenterteilung: **14.11.2012**
(21) Anmeldenummer: 09782037.7
(22) Anmeldetag: 20.08.2009
(51) Int. Cl.: B60C 15/06

(54) **FAHRZEUGLUFTREIFEN**
PNEUMATIC VEHICLE TIRE
PNEU DE VÉHICULE

(30) Priorität: 29.09.2008 DE 102008049314
(43) Veröffentlichungstag der Anmeldung: 15.06.2011
(73) Patentinhaber: Continental Reifen Deutschland GmbH, 30165 Hannover (DE)
(72) Erfinder: BINDER, Axel, 30161 Hannover (DE); WILKE, Thomas, 31542 Bad Nenndorf (DE); FU, Jie, 30167 Hannover (DE); GRION, Mario, 30169 Hannover (DE)
(74) Vertreter: Finger, Karsten
(86) Internationale Anmeldenummer: PCT/EP2009/060779
(87) Internationale Veröffentlichungsnummer: WO 2010/034576

(56) Entgegenhaltungen:
- EP-A- 1 535 761
- WO-A-2008/062608
- GB-A- 1 423 401

## Beschreibung

Die Erfindung betrifft einen Fahrzeugluftreifen für Personenkraftwagen mit einem profilierten Laufstreifen und mit zwei Reifenseitenwänden, mit jeweils einem im radial unteren Bereich einer jeden Reifenseitenwand ausgebildeten aus Draht gewickelten Wulstkern zur Befestigung des Fahrzeugluftreifens auf einer Felge, mit einer Karkasse - insbesondere radialer Bauart-, die sich mit ihrem Hauptteil vom einen Wulstkern in der einen Reifenseitenwand nach radial außen durch die Reifenseitenwand hindurch durch den axialen Erstreckungsbereich der Reifenlauffläche bis in die andere Reifenseitenwand und dort nach radial innen an einer axialen Seite des zweiten Wulstkemes entlang bis unterhalb des Wulstkemes erstreckt und mit einem Umschlagteil an der anderen axialen Seite des Wulstkemes nach radial außen erstreckt.

Üblicherweise ist auf dem Wulstkern ein im Querschnitt dreieckiger Kernreiter (Apex) aus hartem Gummimaterial aufgesetzt. Die Karkasse ist um das aus Wulstkern und Kernreiter vorgefertigte Modul umgeschlagen. Der Kernreiter wird in seiner endgültigen Querschnittsform extrudiert und zur Modulbildung mit dem vorgefertigten Wulstkern vereinigt. Der Kernreiter gewährt mit seiner Form dem Fahrzeugluftreifen die gewünschte Biegesteifigkeit im unteren Bereich der Reifenseitenwand bei Aufrechterhaltung der individuell gewünschten Flexibilität der oberen Reifenseitenwand bei homogenem Übergang der von Steifigkeit und Flexibilität.

Die Ausbildung derartiger vorgefertigter Module ist aufwendig. Das Dreiecksprofil zur Herstellung des Kernreiters muss extrudiert werden. Der extrudierte Strang muss geschnitten, in Ringform gebracht und exakt zentriert mit einem ringförmig hergestellten Wulstkern verbunden werden. Bei besonders schlanken Wulstkerngeometrien mit relativ kurzer axialer Erstreckung und/oder bei Wulstkerngeometrien mit nicht zylindrischer radial äußerer Mantelfläche ist eine exakte Aufbringung des Kernreiters schwierig. Besonders bei Wulstkernen mit größerer radialer Erstreckung als axialer Erstreckung wird dies noch weiter erschwert.

Aus der GB 1 423 401 ist ein Reifen bekannt mit Wulstkernen mit Apex, bei welchem zwischen Karkasse und dem aus Wulstkern mit Apex gebildeten Kernbereich ein textiler Streifen ausgebildet ist, welcher sich von radial innerhalb des Wulstkerns entlang der axialen Außenseiten von Wulstkern und Apex nach radial außen erstreckt.

Der Erfindung liegt die Aufgabe zugrunde, in einfacher sicherer Weise bei Fahrzeugluftreifen für Personenkraftwagen mit einem profilierten Laufstreifen und mit zwei Reifenseitenwänden, mit jeweils einem im radial unteren Bereich einer jeden Reifenseitenwand ausgebildeten aus Draht gewickelten Wulstkern zur Befestigung des Fahrzeugluftreifens auf einer Felge, mit einer Karkasse - insbesondere radialer Bauart-, die sich mit ihrem Hauptteil vom einen Wulstkern in der einen Reifenseitenwand nach radial außen durch die Reifenseitenwand hindurch durch den axialen Erstreckungsbereich der Reifenlauffläche bis in die andere Reifenseitenwand und dort nach radial innen an einer axialen Seite des zweiten Wulstkemes entlang bis unterhalb des Wulstkemes erstreckt und mit einem Umschlagteil an der anderen axialen Seite des Wulstkemes nach radial außen erstreckt, die individuell gewünschte hohe Biegesteifigkeit im unteren Bereich der Reifenseitenwand bei Aufrechterhaltung der individuell gewünschten Flexibilität der oberen Reifenseitenwand zu ermöglichen.

Erfindungsgemäß gelöst wird die Aufgabe durch die Ausbildung eines Fahrzeugluftreifens für Personenkraftwagen mit einem profilierten Laufstreifen und mit zwei Reifenseitenwänden, mit jeweils einem im radial unteren Bereich einer jeden Reifenseitenwand ausgebildeten aus Draht gewickelten Wulstkern zur Befestigung des Fahrzeugluftreifens auf einer Felge, mit einer Karkasse - insbesondere radialer Bauart-, die sich mit ihrem Hauptteil vom einen Wulstkern in der einen Reifenseitenwand nach radial außen durch die Reifenseitenwand hindurch durch den axialen Erstreckungsbereich der Reifenlauffläche bis in die andere Reifenseitenwand und dort nach radial innen an einer axialen Seite des zweiten Wulstkernes entlang bis unterhalb des Wulstkemes erstreckt und mit einem Umschlagteil an der anderen axialen Seite des Wulstkernes nach radial außen erstreckt, gemäß den Merkmalen von Anspruch 1 dadurch, dass eine Gummilage zwischen Karkasse und Wulstkern ausgebildet ist, die sich in Umfangsrichtung des Fahrzeugluftreifens über den gesamten Umfang des Fahrzeugluftreifens erstreckt und die sich von radial innerhalb des Wulstkerns in direktem Berührkontakt zum Wulstkern mit ihren beiden axialen Erstreckungsbereichen auf beiden axialen Begrenzungsseiten des Wulstkernes jeweils in direktem Berührkontakt zum Wulstkern nach radial außen erstreckt, so dass die Gummilage mit Ihren beiden Erstreckungsbereichen den Wulstkern in direktem Berührkontakt vollständig umschließen, wobei sich die beiden Erstreckungsbereiche ab der Position ihres gegenseitigen Kontaktes radial außerhalb des Wulstkemes in direktem Berührkontakt zu einander nach radial außen erstrecken, und der erste Erstreckungsbereich in einer ersten radialen Position und der zweite in einer zweiten, von der ersten radialen Position abweichenden Position endet. Hierdurch wird direkt radial oberhalb des Wulstkemes Gummimaterial gebildet, das näherungsweise einen dreieckigen Querschnitt mit nach radial außen weisender Verjüngung aufweist und das im fertigen Reifen zwischen Hauptteil der Karkasse und Umschlagteil der Karkasse angeordnet ist. Hierdurch kann die Reifenseitenwand im radial inneren Bereich ausreichend biegesteif und im radial äußeren Bereich ausreichend flexibel bei weiterhin homogenem Übergang der Steifigkeit und der Flexibilität gestaltet werden, wobei durch individuelle Wahl der ersten und zweiten Position eine individuelle Gestaltung von Biegesteifigkeit und Flexibilität ermöglicht wird. Auch bei besonders schlanken Wulstkerngeometrien mit relativ kurzer axialer Erstreckung und/oder bei Wulstkerngeometrien mit nicht zylindrischer radial äußerer Mantelfläche und auch bei Wulstkernen mit größerer radialer Erstreckung als axialer Erstreckung kann das Wulstmodul sehr genau und einfach hergestellt werden.

Bevorzugt ist die Ausbildung eines Fahrzeugluftreifens gemäß den Merkmalen von Anspruch 2, wobei die erste radiale Position in einem radialen Abstand H_{A} von der radial äußeren Mantelfläche des Wulstkerns und die zweite radiale Position in einem radialen Abstand H_{I} von der radial äußeren Mantelfläche des Wulstkerns ausgebildet ist, wobei H_{A} > H_{I} ist und für die Differenz ΔH aus (H_{A} - H_{I} ) gilt: 2mm ≤ ΔH ≤ 8mm, insbesondere ΔH=5mm. Dies ermöglicht die Ausbildung mit einem sehr schlanken, homogenen Auslauf.

Bevorzugt ist die Ausbildung eines Fahrzeugluftreifens gemäß den Merkmalen von Anspruch 3, wobei die erste radiale Position in einem radialen Abstand H_{A} von der radial äußeren Mantelfläche des Wulstkerns und die zweite radiale Position in einem radialen Abstand H_{I} von der radial äußeren Mantelfläche des Wulstkerns ausgebildet ist, wobei wobei H_{A} > H_{I} ist und für H_{A} gilt: 10mm ≤ H_{A} ≤ 15mm oder 25mm H_{A}, insbesondere 25mm ≤ H_{A} ≤ 55mm. Die Ausbildung mit 10mm ≤ H_{A} ≤ 15mm ermöglicht einen guten homogenen Übergang zwischen Wulstbereich und Seitenwandbereich bei guter Wulsthaltbarkeit. Die Ausbildung mit 25mm ≤ H_{A}, insbesondere 25mm ≤ H_{A} ≤ 55mm ermöglicht zusätzliche verbesserte Handlingeigenschaften des Fahrzeugluftreifens. In beiden Bereichen liegt die Abstufung der beiden Erstreckungsbereiche zu einander außerhalb des belasteten Bereichs der unteren Reifenseitenwand.

Bevorzugt ist die Ausbildung eines Fahrzeugluftreifens gemäß den Merkmalen von Anspruch 4, wobei die erste radiale Position in einem radialen Abstand H_{K} von der radial inneren Mantelfläche des Wulstkerns ausgebildet ist, wobei für H_{K} gilt:
H_{K} ≤ 25mm oder H_{K} ≥ 35mm. Die Ausbildung mit H_{K} ≤ 25mm ermöglicht einen guten homogenen Übergang zwischen Wulstbereich und Seitenwandbereich bei guter Wulsthaltbarkeit. Die Ausbildung mit H_{K} ≥ 35mm ermöglicht zusätzliche verbesserte Handlingeigenschaften des Fahrzeugluftreifens. In beiden Bereichen liegt die Abstufung der beiden Erstreckungsbereiche zu einander außerhalb des belasteten Bereichs der unteren Reifenseitenwand.

Bevorzugt ist die Ausbildung eines Fahrzeugluftreifens gemäß den Merkmalen von Anspruch 5, bei dem die erste radiale Positon radial weiter außerhalb als die zweite radiale Position ausgebildet ist, und bei dem der erste Erstreckungsbereich der Gummilage zwischen Hauptteil der Karkasse und dem zweiten Erstreckungsbereich der Gummilage ausgebildet ist. Hierdurch ist ein vereinfachter Herstellungsprozess möglich.

Bevorzugt ist die Ausbildung eines Fahrzeugluftreifens gemäß den Merkmalen von Anspruch 6, wobei die Gummilage mit einer Dicke d ausgebildet ist, für die gilt:
0,5 ≤ d ≤ 2mm. Hierdurch ist eine besonders harmonische Verbindung mit dem Wulstkern ermöglicht.

Bevorzugt ist die Ausbildung eines Fahrzeugluftreifens gemäß den Merkmalen von Anspruch 7, wobei die Gummilage mit einer Shore A - Härte von maximal 85 - insbesondere 70 - ausgebildet ist. Hierdurch ist zur Herstellung der Gummilage auch der Einsatz von Standardkalandem möglich.

Bevorzugt ist die Ausbildung eines Fahrzeugluftreifens gemäß den Merkmalen von Anspruch 8, wobei der gewickelte Wulstkern in seiner radialen Erstreckung ein maximales Maß b und in seiner axialen Erstreckung ein maximales Maß a aufweist mit b > a. Der in axialer Richtung schmale und in radialer Richtung hohe Wulstkern ermöglicht es, dass die über die Karkasse eingeleiteten Zugkräfte keine großen Torsionskräfte auf den Wulstkern ausüben, die Torsionsbewegungen des Wulstkernes bewirken könnten, und auch sehr stabil um den Wulstkern sitzt. Die Gefahr eines Wulstkernausfalls ist somit zusätzlich minimiert. Die Gefahr von unerwünschtem Lösen des Sitzes auf der Felge wird ebenfalls minimiert. Hierdurch können sogar sehr kurze Umschlagteile der Karkasse unter Beibehaltung eines sicheren Sitzes und mit guter Wulsthaltbarkeit umgesetzt werden.

Die Erfindung wird im Folgenden an Hand der in den Figuren 1 bis 3 dargestellten Ausführungsbeispiele näher erläutert. Hierin zeigen
- Fig.1: einen erfindungsgemäßen Fahrzeugluftreifen radialer Bauart für Personenkraftwagen in schematischer Querschnittsdarstellung in einer Querschnittsebene, die die Reifenachse enthält,
- Fig. 2a: Darstellung des unteren Reifenseitenwandbereichs des Fahrzeugluftreifens von Fig. 1 mit Reifenwulst in Querschnittsdarstellung zur Erläuterung der Ausbildung des Reifenwulsts,
- Fig. 2b: Darstellung des in Fig. 2a dargestellten Reifenwulstbereichs des fertig hergestellten, auswlkanisierten Fahrzeugluftreifens, und
- Fig. 3: Vergrößerte Darstellung des mit einer Gummilage umhüllten Wulstkerns von Fig. 1 und Fig. 2a.

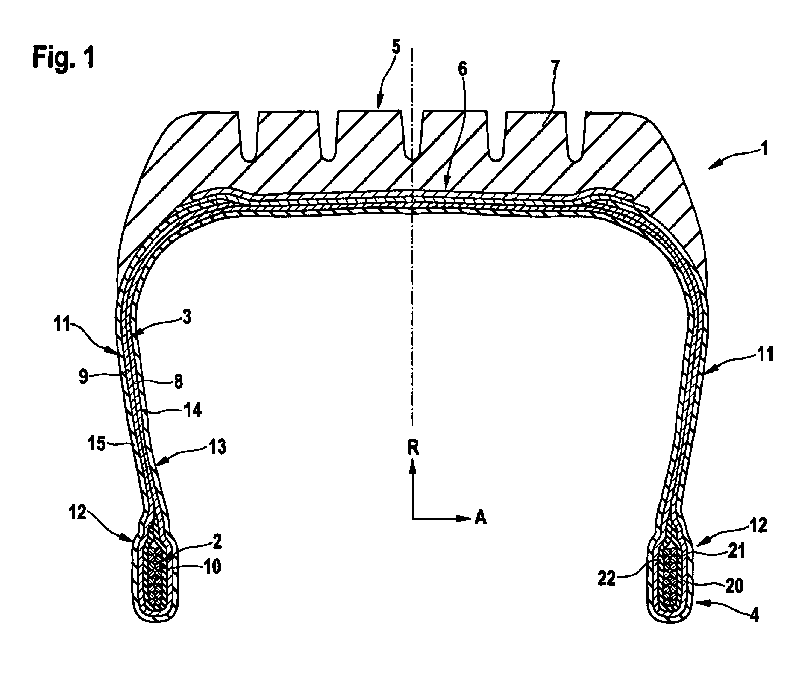

In Fig. 1 ist der Aufbau eines Fahrzeugluftreifens 1 beispielhaft dargestellt. Der Fahrzeugluftreifen ist symmetrisch zur gestrichelt dargestellten Äquatorebene ausgebildet. Der Fahrzeugluftreifen 1 ist ein Fahrzeugluftreifen radialer Bauart für Personenkraftwagen mit zwei von einander in axialer Richtung A beabstandeten Reifenseitenwänden 11 und einem axial dazwischen ausgebildeten Kronenbereich 5. Die Reifenseitenwände 11 sind in ihrem radial inneren Endbereich als Wulstbereich 12 zur Befestigung des Reifens auf der Felge ausgebildet und erstrecken sich vom Wulstbereich 12 in radialer Richtung R nach außen bis zur Reifenschulter. Der Kronenbereich 5 erstreckt sich in axialer Richtung A von Reifenschulter zu Reifenschulter.

Der Fahrzeugluftreifen 1 ist mit einer in Umfangsrichtung U über den Umfang des Fahrzeugluftreifens 1 erstreckten Karkasse 3 mit einem Hauptteil 8 und beiderseits des Hauptteils 8 jeweils ausgebildetem Umschlagteil 9 ausgebildet. Die Karkasse 3 besteht in bekannter Weise aus einer oder zwei aufeinander gelegten Lagen von in Kautschuk eingebetteten parallelen Festigkeitsträgern. Die Festigkeitsträger sind herkömmliche bekannte Festigkeitsträger zum Einsatz in Karkassen von Personenkraftwagen. Im Ausführungsbeispiel sind die Festigkeitsträger textile Festigkeitsträger, beispielsweise Corde aus Rayon, Polyester oder ähnlichem für die Herstellung von Karkassen als geeignet bekannte textile Festigkeitsträger.

Vom Wulstbereich 12 der rechts dargestellten ersten Reifenseitenwand 11 ausgehend ist die Karkasse 3 mit ihrem Hauptteil 8 in radialer Richtung nach außen durch die Reifenseitenwand 11 hindurch bis zum rechten Schulterbereich, dann vom rechten Schulterbereich in axialer Richtung A durch den Kronenbereich 5 bis zum linken Schulterbereich des Fahrzeugluftreifens 1 und vom linken Schulterbereich des Fahrzeugluftreifens 1 in radialer Richtung nach innen durch die links dargestellte zweite Reifenseitenwand 11 hindurch bis zum Wulstbereich 12 erstreckt ausgebildet.

Über den Umfang des Fahrzeugluftreifens 1 erstreckt sind radial außerhalb der Karkassenlagen der Karkasse 3 radialer Bauart angeordnet mehrere Gürtellagen eines Gürtels 6 mit in Kautschuk eingebetteten Festigkeitsträgern. Radial außerhalb des Gürtels 6 bildet auf dem Gürtel 6 angeordnet in bekannter Weise ein profilierter Laufstreifen 7 den radialen Abschluss des Reifenaufbaus.

Im Wulstbereich 12 des Fahrzeugluftreifens 1 ist ein in Umfangsrichtung U des Fahrzeugluftreifens ausgerichteter über den gesamten Umfang erstreckter zugfester Wulstkern 2 ausgebildet. Der Wulstkern 2 ist ein aus gummiertem Stahldraht gewickelter Wulstkern 2.

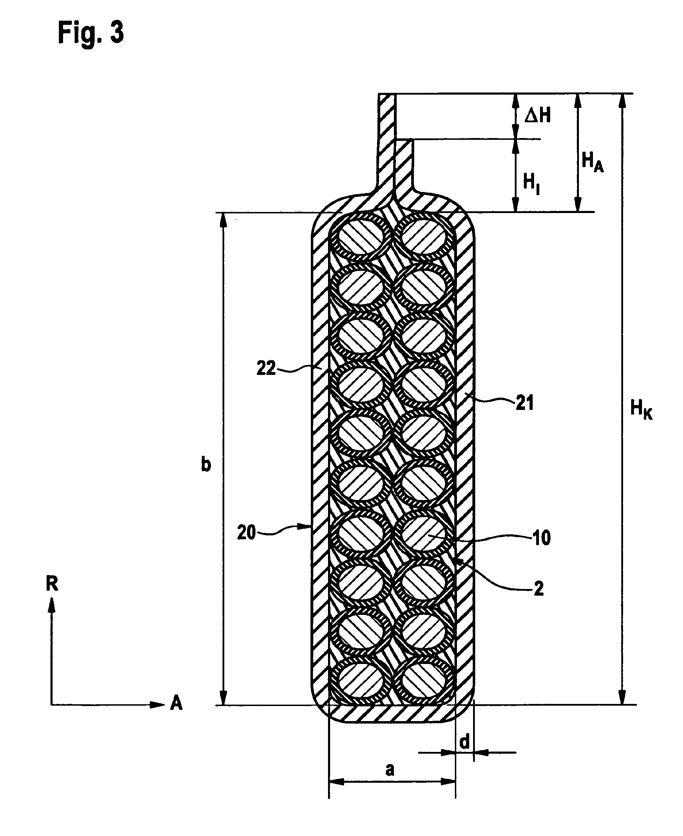

Wie in Fig. 3 zu erkennen ist, ist der Wulstkern 2 in radialer Richtung R des Fahrzeugluftreifens 1 spiralig aus einem endlosen Wulstdraht mit y in radialer Richtung übereinander in Berührkontakt zueinander befindlichen Drahtwindungen aufgewickelt. In axiale Richtung A sind jeweils x derartige Drahtwindungen nebeneinander in Berührkontakt zueinander befindlich angeordnet.

Für die Windungszahlen x in axialer Richtung A und y in radialer Richtung R gilt: y > 3x.

In dem in Fig. 3 dargestellten Ausführungsbeispiel sind in axialer Richtung A zwei Windungen (x=2) und in radialer R acht Windungen (x=8) gewählt. Der Wulstkern 2 hat einen rechteckigen Querschnitt, bei dem die kleinere Grundseite in axialer Richtung A und die größere Grundseite in radialer Richtung R des Fahrzeugluftreifens weist.

Der Wulstkern 2 weist eine maximale Erstreckung a in axialer Richtung A und eine maximale Erstreckung b in radialer Richtung R des Fahrzeugluftreifens auf.

Für die Maße der maximalen Erstreckung b in radialer Richtung R und der maximalen Erstreckung a in axialer Richtung A gilt: b ≥ 3a.

In dem in Fig. 3 dargestellten Ausführungsbeispiel ist b = 4a gewählt.

Wie in Fig. 3 dargestellt ist, erstreckt sich der Wulstkern 2 mit seiner radial äußeren Mantelfläche bis in die radiale Position Rₖ. Wie in den Figuren 1, 2a und 3 dargestellt ist, ist der Fahrzeugluftreifen 1 frei von Kernreitern ausgebildet. Um den Wulstkern 2 ist ein Gummistreifen 20 gelegt, der sich über den gesamten Umfang des Fahrzeugluftreifens 1 erstreckt und der den Wulstkern 2 vollständig umhüllt. Hierzu erstreckt sich der Gummistreifen 20 über die gesamte axiale Erstreckung a des Wulstkerns 2 und über dessen gesamte Erstreckung in Umfangsrichtung an der radial inneren Mantelfläche des Wulstkerns 2 in vollständigem Berührkontakt zum Wulstkern 2. Auf der zur axialen Außenseite des Fahrzeugluftreifens weisenden axialen Seite des Wulstkerns 2 ist der Gummistreifen 20 mit seinem axial äußeren Erstreckungsbereich 21 entlang der radialen Erstreckung des Wulstkerns 2 in vollständigem Berührkontakt zur axialen Außenseite des Wulstkerns 2 nach radial außen erstreckt ausgebildet. Auf der zur axialen Innenseite des Fahrzeugluftreifens weisenden axialen Seite des Wulstkerns 2 ist der Gummistreifen 20 mit seinem axial inneren Erstreckungsbereich 22 entlang der radialen Erstreckung des Wulstkerns 2 in vollständigem Berührkontakt zur axialen Innenseite des Wulstkerns 2 nach radial außen erstreckt ausgebildet.

Der axial äußere Erstreckungsbereich 21 und der axial innere Erstreckungsbereich 22 des Gummistreifens 20 sind dabei bis zur radialen Position Rₖ der radial äußeren Mantelfläche des Wulstkerns 2 über die gesamte radiale Erstreckung des Wulstkerns 2 nach radial außen in vollständigem Berührkontakt zum Wulstkern 2 erstreckt ausgebildet. Der axial äußere Erstreckungsbereich 21 und der axial innere Erstreckungsbereich 22 des Gummistreifens 20 sind nach Erreichen der radialen Position Rₖ der radial äußeren Mantelfläche des Wulstkerns 2 entlang der radial äußeren Mantelfläche des Wulstkerns 2 in engem Berührkontakt zum Wulstkern 2 in axialer Richtung aufeinander zu erstreckt bis zu einer axialen Position, in der der axial äußere Erstreckungsbereich 21 und der axial innere Erstreckungsbereich 22 des Gummistreifens 20 im Bereich der radial äußeren Mantelfläche des Wulstkerns 2 sich berühren. Von dieser Position des Berührkontaktes ausgehend erstrecken sich der radial äußere Erstreckungsbereich 21 und der axial innere Erstreckungsbereich 22 wieder nach radial außen. Der axial äußere Erstreckungsbereich 21 des Gummistreifens 20 endet in einer radialen Position im radialen Abstand H_{I} von der radial äußeren Mantelfläche des Wulstkerns 2. Der axial innere Erstreckungsbereich 22 des Gummistreifens 20 endet in einer radialen Position im radialen Abstand H_{A} von der radial äußeren Mantelfläche des Wulstkerns 2. Dabei gilt für den radialen Abstand H_{A} und den radialen Abstand H_{I}: H_{A} > H_{I}.

Die Differenz ΔH aus (H_{A} - H_{I}) ist dabei so gewählt, dass (2mm ≤ ΔH ≤ 8mm). Im dargestellten Ausführungsbeispiel ist die Differenz gewählt mit ΔH = 5mm.

Der radiale Abstand H_{A} ist gewählt, dass (10mm ≤ H_{A} ≤ 15mm). Im gewählten Ausführungsbeispiel ist H_{A} mit H_{A} = 12mm gewählt. In alternativer, nicht dargestellter Ausführung ist H_{A} mit 25mm ≤ H_{A}, insbesondere mit 25mm ≤ H_{A} ≤ 55mm gewählt.

Der radiale Abstand H_{K}, welcher den radialen Abstand des weiter radial außen liegenden Endes der beiden axialen Erstreckungsbereiche 21 und 22 des Gummistreifens 20 von der radial inneren Mantelfläche des Wulstkern 2 angibt, ist so gewählt, dass H_{K} ≤ 25mm. In alternativer - nicht dargestellter - Ausbildung ist oder H_{K} ≥ 35mm gewählt.

Der Gummistreifen 20 ist aus einem Gummimaterial bekannter Art mit einer Härte Shore A von maximal 85 ausgebildet. Der Gummistreifen 20 ist mit einer Dicke d ausgebildet, für die gilt: 0,5 ≤ d ≤ 2mm. Im gewählten Ausführungsbeispiel sei d = 1,2 mm gewählt.

In besonderer Ausbildung ist der Gummistreifen 20 ist aus einem Gummimaterial bekannter Art mit einer Härte Shore A von 70 ausgebildet

Die Karkasse 3 erstreckt sich - wie in den Figuren 1, 2a und 3a zu erkennen ist - mit ihrem Hauptteil 8 zu beiden Seiten der Äquatorebene aus dem Kronenbereich 5 nach axial außen zur jeweiligen Reifenschulter. Von der Reifenschulter erstreckt sich die Karkasse 3 mit ihrem Hauptteil 8 jeweils durch die Reifenseitenwand 11 nach radial innen bis radial äußeren Ende des axial inneren Erstreckungsbereich 22 des Gummistreifens 20. Von hier erstreckt sich die Karkasse 3 mit ihrem Hauptteil 8 auf der axial inneren zur Äquatorebene hinweisenden Seite des axial inneren Erstreckungsbereichs 22 des Gummistreifens 20 entlang des Gummistreifen 20 in vollständigem Berührkontakt zum axial inneren Erstreckungsbereichs 22 des Gummistreifens 20 bis radial unter den Wulstkern 2 und dann radial unterhalb des Wulstkerns 2 in vollständigem Berührkontakt zum Gummistreifens 20 an der nach radial innen weisenden Seite des Gummistreifens 20 entlang nach axial außen bis zur axial äußeren vom Fahrzeugluftreifen 1 weg weisenden Seite des axial äußeren Erstreckungsbereichs 21 des Gummistreifens 20. Von hier erstreckt sich die Karkasse 3 in einem nach radial außen umgeschlagenen Umschlagteil 9 in vollständigem Berührkontakt zum axial äußeren Erstreckungsbereich 21 des Gummistreifens 20 nach radial außen an der axialen Außenseite axial äußeren Erstreckungsbereich 21 des Gummistreifens 20 entlang bis zum radial äußeren Ende des axial äußeren Erstreckungsbereichs 21. Vom radial äußeren Ende des axial äußeren Erstreckungsbereichs 21 erstreckt sich das Umschlagteil 9 der Karkasse 3 über die radiale Erstreckung ΔH in vollständigem Berührkontakt zur nach axial außen weisenden Seite des axial inneren Erstreckungsbereichs 22 des Gummistreifens 20 nach radial außen bis zum radial äußerem Ende des axial inneren Erstreckungsbereichs 22 des Gummistreifens 20. Vom radial äußeren Ende des axial inneren Erstreckungsbereichs 22 des Gummistreifens 20 aus erstreckt sich das Umschlagteil 9 der Karkasse 3 dann in vollständigem Berührkontakt zum Hauptteil 8 der Karkasse 3 weiter nach radial außen. Im dargestellten Ausführungsbeispiel erstreckt sich das Umschlagteil 9 der Karkasse 3 dabei in vollständigem Berührkontakt zum Hauptteil 8 der Karkasse 3 nach radial außen durch die gesamte radiale Erstreckung der Reifenseitenwand 11 hindurch bis in den Kronenbereich 5 des Fahrzeugluftreifens 1 und endet im Bereich der Reifenschulter unterhalb der axial äußeren Kanten des Gürtels 6.

Der Fahrzeugluftreifen 1 ist mit einer in Umfangsrichtung U über den Umfang des Fahrzeugluftreifens 1 erstreckten weiteren Gummilage 13 mit einem Hauptteil 14 und beiderseits des Hauptteils 14 jeweils ausgebildetem Umschlagteil 15 ausgebildet. Die weitere Gummilage 13 ist auf der von der Karkasse 3 aus gesehenen Innenseite des Fahrzeugluftreifens ebenfalls mit ihrem Hauptteil 14 ausgebildet, das sich in direktem Berührkontakt zum Hauptteil 8 der Karkasse 3 über den gesamten Erstreckungsbereich des Hauptteils 8 vom linken Wulstbereich 12 ausgehend in radiale Richtung R nach außen über die gesamte in Fig. 1 links dargestellte erste Reifenseitenwand 11, dann in axialer Richtung A über die gesamte axiale Erstreckung des Kronenbereichs 5 bis zu der in Fig. 1 rechts dargestellten zweiten Reifenseitenwand 11 und dann in radialer Richtung R nach innen entlang der gesamten rechts dargestellten zweiten Reifenseitenwand 11 bis zu dem rechts dargestellten Wulstbereich 12 erstreckt. In beiden Wulstbereichen 12 erstreckt sich die Gummilage 13 mit ihrem Hauptteil 14 in direktem Berührkontakt zum Hauptteil 8 der Karkasse 3 bis radial unterhalb des jeweiligen Wulstkerns 2 und dann im engen Berührkontakt zur Karkasse 3 auf der radial inneren Seite des jeweiligen Wulstkerns 2 in axialer Richtung nach außen zu der vom Fahrzeugluftreifen 1 wegweisenden Außenseite des Wulstkerns 2. Von hier erstreckt sich die Gummilage 13 jeweils mit einem Umschlagteil 15 nach radial außen durch die gesamte jeweilige Reifenseitenwand 11 in vollständigem Berührkontakt zum jeweiligen Umschlagteil 9 der Karkasse 3 an der von der Karkasse 3 nach axial außen wegweisenden Seite bis zum Laufstreifen 7 im Kronenbereich 5 des Fahrzeugluftreifens 1.

Im dargestellten Ausführungsbeispiel ist die Gummilage 13 mit ihrem Umschlagteil 15 jeweils in vollständigem Berührkontakt zum Umschlagteil 9 der Karkasse 3 nach radial außen bis in den Kronenbereich 5, in der Reifenschulter nach axial innen erstreckt in vollständigem Berührkontakt zum Umschlagteil 9 der Karkasse 3 und in zusätzlichem Berührkontakt zum Laufstreifen 7 bis zum Gürtel 6 und ab Erreichen der Gürtelkante nach axial innen erstreckt in vollständigem Berührkontakt zum Umschlagteil 9 der Karkasse 3 und in zusätzlichem Berührkontakt zum Gürtel 6. Die Erstreckung des Umschlagteils 15 endet in engem Berührkontakt unterhalb des Gürtels in Berührkontakt Umschlagteil 9 der Karkasse 3 und zum Gürtel 6.

Die Gummilage 13 ist über ihre gesamte axiale Erstreckung hinweg - d.h. ausgehend von ihrem links dargestellten ersten axialen Ende unterhalb der links dargestellten ersten Gürtelkante über ihre gesamte radiale Erstreckung über die axial äußere Seite der linke Reifenseitenwand 11 hinweg, um den links dargestellten Wulstkern 2 herum, auf der Innenseite des Fahrzeugluftreifens 1 längs der ersten links dargestellten Reifenseitenwand 11, längs des Kronenbereichs 5, längs der rechten Reifenseitenwand 11 bis unterhalb des rechten Wulstkerns 2, um den rechten Wulstkern 2 herum, längs ihrer radialen Erstreckung an der axial äußeren Seite der rechten zweiten Reifenseitenwand 11 bis zu ihrem rechts dargestellten zweiten axialen Ende unterhalb der rechts dargestellten zweiten Gürtelkante hin - aus einer einstückig ausgebildeten Kautschuklage hergestellt.

Die Gummilage 13 bildet dabei unterhalb des Laufstreifens 7 - ausgehend von der links dargestellten ersten Reifenschulter an der axialen Außenseite des Fahrzeugluftreifens 1 über ihre vollständige radiale Erstreckung an der zur Außenseite des Fahrzeugluftreifens weisenden axialen Seite der rechten Reifenseitenwand 11, über ihren gesamten Erstreckungsbereich um den linken Reifenwulst 12, über ihren gesamten Erstreckungsbereich im Innern des Fahrzeugluftreifens von links dargestelltem erstem Reifenwulst 12 zu rechts dargestelltem zweiten Reifenwulst 12, über ihren gesamten Erstreckungsbereich um den rechten Reifenwulst 12 sowie über ihre gesamte radiale Erstreckung an der zur Außenseite des Fahrzeugluftreifens weisenden Seite der rechten Reifenseitenwand 11 bis zur rechten Reifenschulter - die gesamte Oberfläche des Fahrzeugluftreifens 1.

Das Kautschukmaterial, aus dem die Gummilage 13 hergestellt ist, ist eine herkömmliche für den Reifeneinsatz geeignete halobutylfreie, die Diffusion von Luft reduzierende Kautschukmischung bekannter Art mit Widerstandsfähigkeit gegen Rissbildung und Beständigkeit gegen Ermüdung.

Die Dicke der zur Ausbildung der Gummilage 13 ausgebildeten Kautschuklage ist beispielsweise so gewählt, dass diese über ihre gesamte axiale Erstreckung vor der Wulstformung in der Vulkanisation eine gleichmäßige Dicke aufweist. Das Maß dieser Dicke ist aus dem Bereich 1mm bis 4mm gewählt. Beispielsweise liegt es bei 2mm.

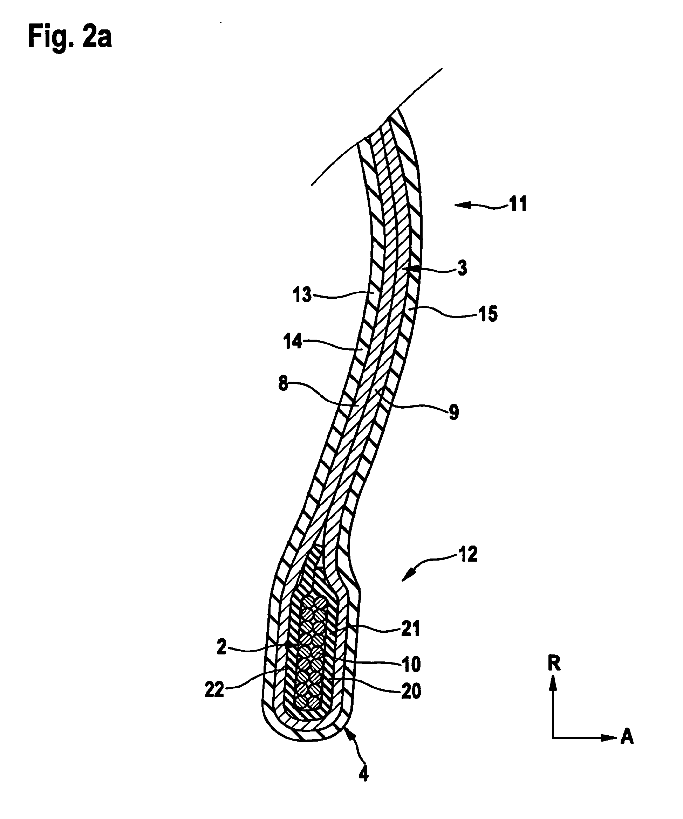

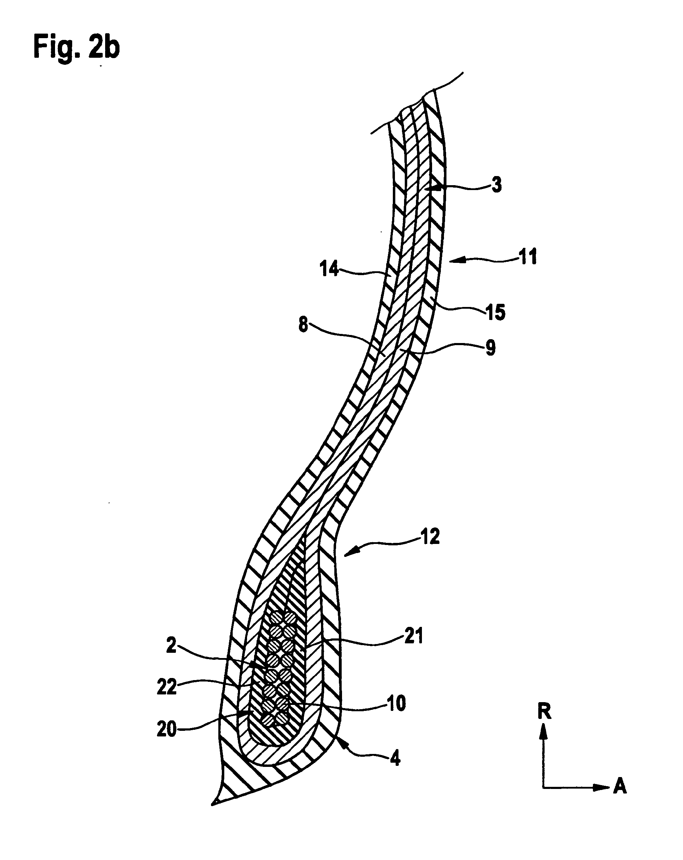

In Fig. 2b ist der in Fig. 2a dargestellte Wulstbereich nach Ausformung und Ausheizung in der Vulkanisationspresse dargestellt. Dabei ist erkennbar, dass der axial äußere Erstreckungsbereich 21 und der axial innere Erstreckungsbereich 22 des Gummistreifens 20 in ihrem radial äußeren Erstreckungsbereich radial oberhalb des Wulstkerns 2 durch ihren in Fig. 2a und 3 dargestellten Verlauf, die gewählte Dimensionierung und unterschiedliche Erstreckung beim ausgeformten Fahrzeugluftreifen 1 dazu führen, dass der axial äußere Erstreckungsbereich 21 und der axial innere Erstreckungsbereich 22 des Gummistreifens 20 zusammen direkt radial oberhalb des Wulstkerns 2 zwischen Hauptteil 8 der Karkasse 3 und Umschlagteil 9 der Karkasse 3 Gummimaterial mit einem näherungsweise dreieckigem Querschnitt mit nach radial außen weisender Verjüngung bilden. Die Reifenseitenwand 11 wird hierdurch im radial inneren Bereich biegesteif ausgebildet, wobei unter einem homogenen Übergang der Steifigkeit und der Flexibilität die Reifenseitenwand 11 im radial äußeren Bereich flexibel ist. Durch Wahl der Maße H_{A} und H_{I} und somit der Differend ΔH und die Wahl der Dicke d des Gummistreifens 20 kann die gewünschte Biegesteifigkeit im radial inneren Bereich der Reifenseitenwand 11, der gewünschte Verlauf des homogenen Übergangs der Steifigkeit und der Flexibilität bis zum flexiblen Bereich der Reifenseitenwand 11 je nach Erfordernis individuell eingestellt werden.

Fig. 2b zeigt auch, dass während der Ausformungen in der Vulkanisationspresse die Gummilage 13 im radial inneren Bereich des Reifenwulstes 12 die gewünschte Profilierung zum sicheren Sitz auf der Felge erhält.

Zur Herstellung wird bei herkömmlicher, bekannter Herstellung mit Aufbau der Karkassenlagen auf einer zylindrischen Aufbautrommel zunächst die Gummilage 13 und darüber die Karkasse 3 mit ihren Karkasslagen jeweils zylindrisch aufgebaut. Danach werden im Bereich der Sollposition der Wulstkerne 2 jeweils ein Gummistreifen 20 auf die zylindrisch aufgebaute Karkasse 3 über den Umfang der Karkasse erstreckt aufgelegt. Danach werden in herkömmlicher Weise die Wulstkerne 2 jeweils konzentrisch zur Aufbautrommel in der Sollposition auf dem jeweiligen Gummistreifen 20 positioniert. Danach werden in herkömmlicher Weise die Wulstkerne 2 in axialer Richtung aufeinander zu bewegt, der zwischen den Wulstkernen 2 befindliche Erstreckungsbereich des Hauptteils 14 der Gummilage 13, des Hauptteils 8 der Karkasse 3 und des axial inneren Erstreckungsbereichs 22 der Gummistreifen 20 wird radial expandiert und somit bombiert und die axial außerhalb der Wulstkerne 2 befindlichen Umschlagteile 15 von Gummilage 13, Umschlagteile 9 von Karkasse 3 und axial äußeren Erstreckungsbereiche 21 der Gummistreifen 20 werden nach radial außen hoch geklappt.

In alternativer Bauweise werden bei der Herstellung der Karkassenlagen direkt auf die Karkassenlagen die Kautschukstreifen zur Bildung der Gummistreifen 20 aufgebaut. In diesem Fall wird beim Aufbau auf der Karkassenaufbautrommel die Karkasse 3 gemeinsam mit dem die Gummistreifen 20 bildenden Kautschukstreifen aufgelegt. Das Ummanteln des Wulstkerns2 erfolgt wie bei der vorgenannten Herstellungsvariante.

In weiterer alternativer Herstellung wird der Wulstkern 2 bereits mit dem den Gummistreifen 20 bildenden Kautschukstreifen als Modul vorgefertigt. Der Kautschukstreifen wird hierzu bereits vorab um den vorgefertigten Wulstkern 2 umgeschlagen. Zur Herstellung des Fahrzeugluftreifens 1 wird dann dieses vorgefertigte Modul aus Wulstkern 2 und umgeschlagenen Kautschukstreifen direkt auf der Karkasse positioniert und mit eingebaut.

Die Gummilage 13 ist aus einem Gummimaterial bekannter Art mit einer Härte Shore A ausgebildet die im Bereich von 65 bis 75 liegt. In besonderer Ausführung ist sie mit einer ShoreA-Härte von 70 ausgebildet.

In einer besonderen Ausführung ist die Gummilage 13 und der Gummistreifen 20 mit gleicher ShoreA-Härte ausgebildet.

In einer besonderen Ausführung ist die Gummilage 13 und der Gummistreifen 20 mit gleicher Gummimischung ausgebildet.

### Bezugszeichenliste

### (Teil der Beschreibung)

- 1: Fahrzeugluftreifen
- 2: Wulstkern
- 3: Karkasse
- 4: Felgenhornprofil
- 5: Kronenbereich
- 6: Gürtel
- 7: Profilierter Laufstreifen
- 8: Hauptteil der Karkasse
- 9: Umschlagsteil der Karkasse
- 10: Kemdraht
- 11: Reifenseitenwand
- 12: Wulstbereich
- 13: Gummilage
- 14: Hauptteil
- 15: Umschlagteil
- 16:
- 17:
- 18:
- 19:
- 20: Gummistreifen
- 21: Axial äußerer Erstreckungsbereich
- 22: Axial innerer Erstreckungsbereich

## Patentansprüche

1. Fahrzeugluftreifen (1) für Personenkraftwagen mit einem profilierten Laufstreifen (7) und mit zwei Reifenseitenwänden (11), mit jeweils einem im radial unteren Bereich einer jeden Reifenseitenwand (11) ausgebildeten aus Draht (10) gewickelten Wulstkern (2) zur Befestigung des Fahrzeugluftreifens (1) auf einer Felge, mit einer Karkasse (3) - insbesondere radialer Bauart-, die sich mit ihrem Hauptteil (8) vom einen Wulstkern (2) in der einen Reifenseitenwand (11) nach radial außen durch die Reifenseitenwand (11) hindurch durch den axialen Erstreckungsbereich der Reifenlauffläche bis in die andere Reifenseitenwand (11) und dort nach radial innen an einer axialen Seite des zweiten Wulstkernes (2) entlang bis unterhalb des Wulstkernes (2) erstreckt und mit einem Umschlagteil (9) an der anderen axialen Seite des Wulstkernes (2) nach radial außen erstreckt,
**dadurch gekennzeichnet,**
**dass** eine Gummilage (20) zwischen Karkasse (3) und Wulstkern (2) ausgebildet ist, die sich in Umfangsrichtung des Fahrzeugluftreifens über den gesamten Umfang des Fahrzeugluftreifens erstreckt und die sich von radial innerhalb des Wulstkerns (2) in direktem Berührkontakt zum Wulstkern (2) mit ihren beiden axialen Erstreckungsbereichen (21,22) auf beiden axialen Begrenzungsseiten des Wulstkernes jeweils in direktem Berührkontakt zum Wulstkern (2) nach radial außen erstreckt, so dass die Gummilage (20) mit Ihren beiden Erstreckungsbereichen (21,22) den Wulstkern (2) in direktem Berührkontakt vollständig umschließen, wobei sich die beiden Erstreckungsbereiche (21,22) ab der Position ihres gegenseitigen Kontaktes radial außerhalb des Wulstkernes (2) in direktem Berührkontakt zu einander nach radial außen erstrecken, und der erste Erstreckungsbereich (22) in einer ersten radialen Position und der zweite (21) in einer zweiten, von der ersten radialen Position abweichenden Position endet.

2. Fahrzeugluftreifen gemäß den Merkmalen von Anspruch 1,
wobei die erste radiale Position in einem radialen Abstand H_{A} von der radial äußeren Mantelfläche des Wulstkerns (2) und die zweite radiale Position in einem radialen Abstand H_{I} von der radial äußeren Mantelfläche des Wulstkerns (2) ausgebildet ist, wobei H_{A} > H_{I} ist und für die Differenz ΔH aus (H_{A} - H_{I} ) gilt: 2mm ≤ ΔH ≤ 8mm, insbesondere ΔH=5mm.

3. Fahrzeugluftreifen gemäß den Merkmalen von Anspruch 1 oder 2,
wobei die erste radiale Position in einem radialen Abstand H_{A} von der radial äußeren Mantelfläche des Wulstkerns (2) und die zweite radiale Position in einem radialen Abstand H_{I} von der radial äußeren Mantelfläche des Wulstkerns (2) ausgebildet ist, wobei H_{A} > H_{I} ist und für H_{A} gilt: 10mm ≤ H_{A} ≤ 15mm oder 25mm ≤ H_{A}, insbesondere 25mm ≤ H_{A} ≤ 55mm.

4. Fahrzeugluftreifen gemäß den Merkmalen von Anspruch 1,2 oder 3,
wobei die erste radiale Position in einem radialen Abstand H_{K} von der radial inneren Mantelfläche des Wulstkerns (2) ausgebildet ist, wobei für H_{K} gilt: H_{K} ≤ 25mm oder H_{K} ≥ 35mm.

5. Fahrzeugluftreifen gemäß den Merkmalen von einem oder mehreren der vorangegangenen Ansprüche,
bei dem die erste radiale Positon radial weiter außerhalb als die zweite radiale Position ausgebildet ist,
bei dem der erste Erstreckungsbereich (22) der Gummilage (20) zwischen Hauptteil (8) der Karkasse (3) und dem zweiten Erstreckungsbereich (21) der Gummilage (20) ausgebildet ist.

6. Fahrzeugluftreifen gemäß den Merkmalen von einem oder mehreren der vorangegangenen Ansprüche,
wobei die Gummilage (20) mit einer Dicke d ausgebildet ist, für die gilt: 0,5 ≤ d ≤ 2mm.

7. Fahrzeugluftreifen gemäß den Merkmalen von einem oder mehreren der vorangegangenen Ansprüche,
wobei die Gummilage (20) mit einer Shore A - Härte von maximal 85 - insbesondere 70 - ausgebildet ist.

8. Fahrzeugluftreifen gemäß den Merkmalen von einem oder mehreren der vorangegangenen Ansprüche,
wobei der gewickelte Wulstkern (2) in seiner radialen Erstreckung ein maximales Maß b und in seiner axialen Erstreckung ein maximales Maß a aufweist mit b > a.

## Claims

1. Pneumatic vehicle tyre (1) for passenger cars, with a profiled running strip (7) and with two tyre side walls (11), each with a bead core (2), formed in the radially lower region of each tyre side wall (11) and wound from wire (10), for fastening the pneumatic vehicle tyre (1) on a rim, with a carcass (3), in particular of radial type of construction, which extends with its main part (8) from one bead core (2) in one tyre side wall (11) radially outwards through the tyre side wall (11), through the region of axial extent of the tyre tread into the other tyre side wall (11) and there radially inwards, along one axial side of the second bead core (2), to below the bead core (2) and which extends with a wrap-around part (9) radially outwards at the other axial side of the bead core (2), **characterized in that** a rubber ply (20) is formed between the carcass (3) and bead core (2), extends in the circumferential direction of the pneumatic vehicle tyre over the entire circumference of the pneumatic vehicle tyre and extends radially from inside the bead core (2) in direct touch contact with bead core (2), with its two regions of axial extent (21, 22), radially outwards on both axial boundary sides of the bead core, in each case in direct touch contact with the bead core (2), so that the rubber ply (20) completely surrounds, with its two regions of extent (21, 22), the bead core (2) in direct touch contact, the two regions of extent (21, 22) extending, from the position of their mutual contact, radially outside the bead core (2), radially outwards in direct touch contact with one another, and the first region of extent (22) terminating in a first radial position and the second region of extent (21) terminating in a second position deviating from the first radial position.

2. Pneumatic vehicle tyre according to the features of Claim 1, the first radial position being formed at a radial distance H_{A} from the radially outer surface area of the bead core (2) and the second radial position at a radial distance H_{I} from the radially outer surface area of the bead core (2), H_{A} being > H_{I} and the following applying to the difference ΔH of (H_{A} - H_{I}) : 2 mm ≤ ΔH ≤ 8 mm, in particular ΔH=5 mm.

3. Pneumatic vehicle tyre according to the features of Claim 1 or 2, the first radial position being formed at a radial distance H_{A} from the radially outer surface area of the bead core (2) and the second radial position at a radial distance H_{I} from the radially outer surface area of the bead core (2), H_{A} being > H_{I} and the following applying to H_{A}: 10 mm ≤ H_{A} ≤ 15 mm or 25 mm ≤ H_{A}, in particular 25 mm ≤ H_{A} ≤ 55 mm.

4. Pneumatic vehicle tyre according to the features of Claim 1, 2 or 3, the first radial position being formed at a radial distance H_{K} from the radially inner surface area of the bead core (2), the following applying to H_{K}: H_{K} ≤ 25 mm or H_{K} ≥ 35 mm.

5. Pneumatic vehicle tyre according to the features of one or more of the preceding claims, in which the first radial position is formed radially further outside than the second radial position, and in which the first region of extent (22) of the rubber ply (20) is formed between the main part (8) of the carcass (3) and the second region of extent (21) of the rubber ply (20).

6. Pneumatic vehicle tyre according to the features of one or more of the preceding claims, the rubber ply (20) being formed with a thickness d to which the following applies: 0.5 ≤ d ≤ 2 mm.

7. Pneumatic vehicle tyre according to the features of one or more of the preceding claims, the rubber ply (20) being formed with a Shore A hardness of at most 85, in particular 70.

8. Pneumatic vehicle tyre according to the features of one or more of the preceding claims, the wound bead core (2) having a maximum dimension b in its radial extent and a maximum dimension a in its axial extent, with b > a.

## Revendications

1. Pneu de véhicule (1) pour véhicules automobiles, comprenant une bande de roulement profilée (7) et deux parois latérales de pneu (11), avec à chaque fois une tringle (2) enroulée en fil d'acier (10) réalisée dans la région radialement inférieure de chaque paroi latérale de pneu (11), pour la fixation du pneu de véhicule (1) sur une jante, comprenant une carcasse (3) - en particulier de type radial - qui s'étend avec sa partie principale (8) depuis une tringle (2) dans une paroi latérale de pneu (11) radialement vers l'extérieur à travers la paroi latérale de pneu (11) à travers la région d'étendue axiale de la surface de roulement du pneu jusque dans l'autre paroi latérale de pneu (11) et de là radialement vers l'intérieur le long d'un côté axial de la deuxième tringle (2) jusqu'en dessous de la tringle (2), et qui s'étend radialement vers l'extérieur avec une partie d'enveloppe (9) sur l'autre côté axial de la tringle (2),
**caractérisé en ce**
**qu'**une couche de caoutchouc (20) est réalisée entre la carcasse (3) et la tringle (2), laquelle s'étend dans la direction périphérique du pneu de véhicule sur toute la périphérie du pneu de véhicule et s'étend radialement vers l'extérieur depuis radialement à l'intérieur de la tringle (2) en contact direct avec la tringle (2) avec ses deux régions d'étendue axiale (21, 22) sur les deux côtés de limite axiale de la tringle à chaque fois en contact direct avec la tringle (2), de telle sorte que la couche de caoutchouc (20), avec ses deux régions d'étendue (21, 22) entoure complètement la tringle (2) en contact direct, les deux régions d'étendue (21, 22) s'étendant radialement vers l'extérieur à partir de la position de leur contact mutuel radialement à l'extérieur de la tringle (2) en contact direct l'une avec l'autre, et la première région d'étendue (22) se terminant dans une première position radiale et la deuxième (21) dans une deuxième position s'écartant de la première position radiale.

2. Pneu de véhicule selon les caractéristiques de la revendication 1,
dans lequel la première position radiale est réalisée à une distance radiale H_{A} de la surface d'enveloppe radialement extérieurement de la tringle (2) et la deuxième position radiale est réalisée à une distance radiale H_{I} de la surface d'enveloppe radialement extérieure de la tringle (2), avec H_{A} > H_{I} et l'on a pour la différence ΔH de (H_{A} - H_{I}) : 2 mm ≤ ΔH ≤ 8 mm, notamment ΔH = 5 mm.

3. Pneu de véhicule selon les caractéristiques de la revendication 1 ou 2, dans lequel la première position radiale est réalisée à une distance radiale H_{A} de la surface d'enveloppe radialement extérieure de la tringle (2) et la deuxième position radiale est réalisée à une distance radiale H_{I} de la surface d'enveloppe radialement extérieure de la tringle (2), avec H_{A} > H_{I} et l'on a pour H_{A} : 10 mm ≤ H_{A} ≤ 15 mm, ou 25 mm ≤ H_{A}, notamment 25 mm ≤ H_{A} ≤ 55 mm.

4. Pneu de véhicule selon les caractéristiques de la revendication 1, 2 ou 3, dans lequel la première position radiale est réalisée à une distance radiale H_{K} de la surface d'enveloppe radialement interne de la tringle (2), et l'on a pour H_{K} : H_{K} ≤ 25 mm ou H_{K} ≥ 35 mm.

5. Pneu de véhicule selon les caractéristiques d'une ou plusieurs des revendications précédentes,
dans lequel la première position radiale est réalisée radialement plus à l'extérieur que la deuxième position radiale, et
dans lequel la première région d'étendue (22) de la couche de caoutchouc (20) est réalisée entre la partie principale (8) de la carcasse (3) et la deuxième région d'étendue (21) de la couche de caoutchouc (20).

6. Pneu de véhicule selon les caractéristiques d'une ou plusieurs des revendications précédentes,
dans lequel la couche de caoutchouc (20) est réalisée avec une épaisseur d, pour laquelle on a
0,5 ≤ du 2 mm.

7. Pneu de véhicule selon les caractéristiques d'une ou plusieurs des revendications précédentes,
dans lequel la couche de caoutchouc (20) est réalisée avec une dureté Shore A - dureté de 85 au maximum - notamment de 70.

8. Pneu de véhicule selon les caractéristiques d'une ou plusieurs des revendications précédentes,
dans lequel la tringle enroulée (2) présente dans son étendue radiale une dimension maximale b et dans son étendue axiale une dimension maximale a avec b > a.
